# EUROPEAN PATENT SPECIFICATION

(11) **EP 0 736 112 B1**
(45) Date of publication and mention of the grant of the patent: **03.01.2001**
(21) Application number: 95929978.5
(22) Date of filing: 05.09.1995
(51) Int. Cl.: D01C 1/00, D06M 11/44

(54) **A METHOD FOR THE PRODUCTION OF QUALITY COTTON YARNS INVOLVING A LOW-COST PROCESS, FREE OF ENVIRONMENTAL POLLUTION**
VERFAHREN ZUR HERSTELLUNG VON BAUMWOLLGARNEN UNTER ANWENDUNG EINES NIEDRIGKOSTENVERFAHRENS, OHNE UNWELTVERSCHMUTZUNG
PRODUCTION DE FILS DE COTON DE QUALITE SELON UN PROCEDE PEU COUTEUX N'ENTRAINANT PAS DE POLLUTION DE L'ENVIRONNEMENT

(30) Priority: 06.09.1994 GR 94100414
(43) Date of publication of application: 09.10.1996
(73) Proprietor: Innoval Management Limited, Curaçao, Netherlands Antilles (AN)
(72) Inventor: Valkanas, George N., 15132 Maroussi (GR)
(74) Representative: Kremer, Robert A.M.
(86) International application number: PCT/GR95/00015
(87) International publication number: WO 96/07776

(56) References cited:
- EP-A- 0 474 895
- BE-A- 434 058

## Description

This invention refers to an original and profitable method of processing cotton yarns by which the traditional spinning process is substituted by a wet process leading to complete purification of cotton by rendering it hydrophilic by which also the resulting waste waters are introduced to anaerobic digestion in the thermophilic region producing high amounts of energy with complete pollution control

The textile industry is a field of technical and industrial activity since the Renaissance and it is worth mentioning that the first industrial installations and specialised equipment have been developed for textile processing.

The processing of cotton for yarn production up to date is developed along the following series of processes:
a) Mechanical purification and arrangement of yarns in more than 10 steps of high capital and operation cost.
b) Chemical purification by mercerising and scouring where highly expensive installations are used and where alkaline pollution effluent difficult to handle is released.
c) Yarn dyeing where large volumes of water are consumed and where coloured effluents are released.

Thus the cotton yarn production and the cotton fabric production involve complex processes of high production costs and of high water consumption which are releasing to the environment toxic and other harmful pollutants.

The inventor has been intensively involved in R & D work aiming to reduce production costs, to reduce water consumption and to eliminate the environmental pollution in the production of yarn and fabric products from cotton. It was realised that the processing of cotton to yarns mechanically is followed by wet processing. For example, BE-A-434 058 discloses a boiling-off process of cellulose fibers such as cotton with clear calcium hydroxide solutions at temperatures from 60 to 100°C or higher. It was also realised that cotton could be introduced into a wet process in an aqueous environment inducing also fibre orientation. Should this be combined with cotton purification by rendering it hydrophilic to a desirable extent the process will be successful and cotton will assume a form convenient for spinning which will not be prone to agglomeration and to fading. It was also considered that this production may lead to yarns and fabrics production at reduced cost involving much smaller amounts of water with elimination of environmental pollution problems. EP-A-0 474 895 discloses a process of anaerobic treatment of wastewaters giving a high yield in high value biogas. This invention refers to a method for yarn and fabric production featuring the above advantages leading to cotton yarn and to cotton fabric production of a post-mercerised quality in an overall production process free of environmental pollution. The waste material involved is used in the production of energy in form of biogas after anaerobic digestion in the thermophilic region. Thus, this production process constitutes a clean technology concept design running self-sufficient in energy and with pollution control.

This invention provides a method for the processing of cotton wherein the cotton is subjected to a purification process in water rendering it hydrophilic, characterized in that the cotton brought in a propylene or other suitable fibre net is suspended in an aqueous solution at a ratio of 1/15 to 1/20 w/w cotton/solution, containing calcium hydroxide at a ratio of 2-4% w/w calcium oxide/cotton and a non-ionic detergent acting as wetting agent at a ratio of 0.4-4 g/litre water and heated at 60-150°C, preferably 60-80°C, the cotton is kept in that net throughout the process involving pressing, washing, two stages of bleaching for de-coloration and the wastewater with selected balanced pollution load is subjected to anaerobic digestion treatment in the thermophilic region producing biogas with 85% methane content at a rate of 0.45 to 0.5 m³ biogas/kg organic matter degraded, covering the needs in thermal and electrical energy of the procedure and the effluent wastewater is treated aerobically to a degree of purification of BOD 100.

According to an embodiment of this invention the cotton which is received in packages is passed on a polypropylene or other suitable fibre net to a tank filled with water containing calcium oxide at a ratio 2-4% by weight of cotton and also non-ionic detergent at a quantity of 0.4-4 g/lt. of process water. The cotton is suspended in excess of water 1-15 to 1-20 weight/weight brought in a polymer net such as polypropylene net and heated to a temperature of 60 to 150° , preferably 60-80° with raw steam thus continuously agitated. Following its heating it is lifted by a crane and is carried to an horizontal press series where it is compressed to 20 atm. with simultaneous wastewater removal .The compressed cotton is washed in water which originates from the de-coloration unit and is then conveyed to the de-coloration unit where it is bleached in the presence of 10% ClONa or 10% hydrogen peroxide or 5% of ozone solution .Following a two stage de-coloration treatment the cotton is received at high whiteness in the order of 85-90 degree Lovibond. The effluent water from the bleaching process is used for washing the cotton in the press.

Thus a high purity and quality of cotton of 80-90 degree Lovibond and of controlled hydrophilic properties (absorbing of 10-20 g water/g cotton) is produced featuring water absorption rate of 0.5-1.5 g water/g cotton/minute. The hydrophilic nature of the final product depends on the processing conditions with calcium and detergent. The results of this process in cotton quality and on procedure conditions are summarised in Tables 1 and 2.

Then the cotton is dried by conventional methods, i.e. in drying towers with rising hot air, whereas the cotton is mercerised to the desired degree of purification. It is then subject to spinning processes resulting in higher quality yarns for dyeing or weaving.

The process and cleaning water streams which carry chemicals and heat, as well as the resulting solid waste stream, are continuously recycled with a substitution of 20-40% of the quantity of the process water. The waste stream removed has a constant BOD load of 20.000-40.000 and COD of 50.000-100.000. It is passed to the installations for anaerobic digestion which operate in the thermophilic region in a BIOMET PROCESS unit with a yield in biogas (containing methane in the order of 85%) of about 0.5 m³/kg of organic matter degraded. The effluent water produced, following the anaerobic digestion, can be used as process water and is finally subject to aerobic biological treatment to effluent water of BOD 100.

### EXAMPLE 1

10 kg of cotton in a polypropylene net are brought into a water tank of 1 m³ capacity containing 200 litres of water , having in 0.4 kg of calcium hydroxide and 2,5 g/litre Levapon. The contents of the tank are heated to a temperature of 75°C with continuous agitation for three hours. Then the net is lifted by a crane and passed to an horizontal press where the cotton is compressed by the application of pressure 20 atm. with simultaneous water solution removal .The resulting cotton product contains moisture 20%. It is then washed with water from the bleaching process and then transferred in the net to a decoloration unit containing 20% ClONa or 20% H₂O₂ solution. Then it is brought to two-stage bleaching installations similar to those for bleaching paper-pulp. After the second bleaching the whitening of the product was 86 degrees Lovibond. The product at the end has hydrophilic properties expressed as absorptivity of 17.10 g of water/g of cotton and a rate of water absorption of 0.81 g water/g of cotton /minute.

The process water was recycled by substituting 20% of it by fresh processing solution. The pollutant load was stabilised at 22.000 BOD and 48.000 COD. Thus the steady state of chemicals consumption is reduced to 20% of the chemicals originally present in the tank per unit of cotton produced , i.e 0.8 kg calcium hydroxide/100 kg cotton and 0.5 g detergent /litre of water.

### EXAMPLE 2

10 kg of cotton in a polypropylene net are brought into a tank containing 150 litres of water , calcium hydroxide 2% by cotton weight and 2.1 g Levapon/litre of solution. The contents of the tank are heated by raw steam to a temperature of 60°C for three hours. The material in the net is then compressed and bleached as in example 1 .The product has hydrophilic properties expressed as an absorptivity of water 18,28 g /g of cotton and a rate of water absorption of 0.98 g water/g of cotton/minute. The process water was recycled by substituting 20% of it by fresh processing solution. Thus actual chemicals consumption is 0.4 kg calcium hydroxide/100 kg cotton and 0.41 g levapon/litre water.

### EXAMPLE 3

In an enclosure of 1 m³ capacity were brought in a polypropylene net 20 kg of cotton in 300 litres of water containing 0.8 kg calcium hydroxide and 2,5 g Levapon /litre of solution. The total enclosure was heated to 135°C for 2 hrs. The cotton is removed and compressed in an horizontal press to a moisture content of 20% . It is then washed and bleached in a two stage process as per the examples 1 and 2.The following product is finally collected:
a) yield 85.7% , hydrophilic properties: water absorptivity 15.04 g water/g cotton , rate of water absorption 0.71 g water/g cotton/minute
b) yield 85.2% hydrophilic properties: water absorptivity 15.82 g water/g cotton, rate of water absorption 0.82 g water /g cotton/minute

The process water was recycled by substituting 20% of it by fresh processing solution. Thus the actual chemicals consumption is 0.8 kg calcium hydroxide/100 kg of cotton and 0.5 g Levapon/litre of water.

### EXAMPLE 4

In an enclosure of capacity 0.5 m³ are placed 15 kg of cotton in a polypropylene net and 300 litres of solution water containing 0.3 kg calcium hydroxide and 2.1 g Levapon /litre. The total enclosure is heated to 105°C for four hrs. Following the cleaning and bleaching processes explained in examples 1 to 3, the cotton is received at a yield of 86,8% and has the following hydrophilic properties: water absorption capacity 17.99 g water/g cotton; rate of water absorption 0.96 g water/g cotton/minute.

### EXAMPLE 5

The wastewater had a pollution load of 30.000 BOD and 50.000 COD. It is fed to an installation of anaerobic digestion operating in the thermophilic region , producing 0.47 kg of biogas of 85% methane content/kg of COD reduced. The pollution load reduction was 85-88%. Part of the effluent water stream from the anaerobic digestion treatment is recycled into the process water, the rest is processed in the aerobic biological treatment assembly for the production of water stream of BOD 100 which can be safely rejected to the environment.

The biogas produced is used for the production of the steam used in the processing of cotton .The consumption of steam is reduced since the solution water is recycled at a degree of 60-80% and the energy requirements for heating the cotton are also reduced 60-70% of the biogas produced can be used in the generation of electricity for the needs of the plant. This will depend on the size and the design of the plant.

**Table 1**

| Processing Conditions | | | | |
|---|---|---|---|---|
| | Ca(OH)2 gr./ % | Levapon gr./lit | Temperature °C | Time mins |
| 1 | 0.00 | 0.4 | 75 | 120 |
| 2 | 0.00 | 3.8 | 75 | 120 |
| 3 | 4.00 | 0.4 | 75 | 120 |
| 4 | 4.00 | 0.8 | 75 | 120 |
| 5 | 4.00 | 1.1 | 75 | 120 |
| 6 | 4.00 | 1.6 | 75 | 120 |
| 7 | 4.00 | 2.5 | 75 | 120 |
| 8 | 4.00 | 3.8 | 75 | 120 |
| 9 | 4.00 | 0.4 | 60 | 120 |
| 10 | 4.00 | 2.5 | 60 | 120 |
| 11 | 4.00 | 2.5 | 60 | 360 |
| 12 | 4.00 | 0.4 | 75 | 360 |
| 13 | 4.00 | 3.8 | 75 | 360 |
| 14 | 4.00 | 0.4 | 135 | 360 |
| 15 | 4.00 | 3.8 | 135 | 360 |
| 16 | 2.00 | 2.1 | 60 | 240 |
| 17 | 2.00 | 2.1 | 105 | 240 |
| 18 | 2.00 | 2.1 | 105 | 240 |
| 19 | 2.00 | 2.1 | 75 | 240 |
| 20 | 2.00 | 2.1 | 105 | 120 |

**Table 2**

| Results | | | |
|---|---|---|---|
| | Hydrophilic properties | Absorption Ratio | Yield % |
| 1 | 6.53 | 0.02 | 88.3 |
| 2 | 8.10 | 0.20 | 86.4 |
| 3 | 10.48 | 0.55 | 87.8 |
| 4 | 13.5 | 0.6 | 86.6 |
| 5 | 15.5 | 0.72 | 85.8 |
| 6 | 17.5 | 0.81 | 85.2 |
| 7 | 19.5 | 0.9 | 84.8 |
| 8 | 17.32 | 0.94 | 85.2 |
| 9 | 13.20 | 1.08 | 87.3 |
| 10 | 18.14 | 1.12 | 84.2 |
| 11 | 16.31 | 1.29 | 83.3 |
| 12 | 11.26 | 0.7 | 85.5 |
| 13 | 12.00 | 1.8 | 84.8 |
| 14 | 10.05 | 0.71 | 85.7 |
| 15 | 17.84 | 1.71 | 83.7 |
| 16 | 17.20 | 1.45 | 87.4 |
| 17 | 17.99 | 0.96 | 86.8 |
| 18 | 17.53 | 0.91 | 87.1 |
| 19 | 17.28 | 0.98 | 86.3 |
| 20 | 17.84 | 0.91 | 84.11 |

## Claims

1. A method for the processing of cotton wherein the cotton is subjected to a purification process in water rendering it hydrophilic, characterized in that the cotton brought in a polypropylene or other suitable fibre net is suspended in an aqueous solution at a ratio of 1/15 to 1/20 w/w cotton/solution, containing calcium hydroxide at a ratio of 2-4% w/w calcium oxide/cotton and a non-ionic detergent acting as wetting agent at a ratio of 0.4-4 g/litre water and heated at 60-150°C, preferably 60-80°C, the cotton is kept in that net throughout the process involving pressing, washing, two stages of bleaching for de-coloration and the wastewater with selected balanced pollution load is subjected to anaerobic digestion treatment in the thermophilic region producing biogas with 85% methane content at a rate of 0.45 to 0.5 m³ biogas/kg organic matter degraded, covering the needs in thermal and electrical energy of the procedure and the effluent wastewater is treated aerobically to a degree of purification of BOD 100.

2. Method according to claim 1, characterized in that the purified cotton has a water absorptivity of 10 to 20 g water/g cotton.

3. Method according to claim 1 or 2, characterized in that the purified cotton achieves a rate of water absorption of 0.5-1.5 g. water/g cotton/minute.

4. Method according to anyone of claims 1 to 3, characterized in that the processing solution is recycled by substitution of 20-40% of it with fresh processing solution and the water stream acquires a balance pollution load of 20.000-40.000 BOD and of 50.000-100.000 COD depending on the conditions of processing.

5. Method according to anyone of claims 1 to 4, characterized in that the purified cotton has a high degree of whiteness of 85-90 Lovibond degrees.

6. Method according to anyone of claims 1 to 5, characterized in that the purified post-mercerised and bleached cotton is dried and spun to high quality yarns for weaving and dyeing.

## Patentansprüche

1. Verfahren zur Verarbeitung von Baumwolle, bei welchem die Baumwolle einem Reinigungsverfahren in Wasser unterworfen wird, das sie hydrophil macht, dadurch gekennzeichnet, daß die in einem Netz aus Polypropylen oder anderer geeigneter Faser untergebrachte Baumwolle in einer wässrigen Lösung bei einem Verhältnis von 1/15 bis 1/20 Gew./Gew. Baumwolle zu Lösung, welche Calciumhydroxid in einem Verhältnis von 2-4 Gew./Gew.-% Calciumoxid/Baumwolle und ein als Benetzungsmittel wirkendes, nichtionisches Detergens in einem Verhältnis von 0,4-4 g/Liter Wasser enthält, suspendiert und auf 60-150°C, bevorzugt 60-80°C, erhitzt wird, die Baumwolle in diesem Netz während der Verarbeitung, die Pressen, Waschen, zwei Bleichstufen zur Entfärbung umfaßt, gehalten wird, und das Abfallwasser mit ausgewählter ausgeglichener Verunreinigungsbeladung anaerober Abbaubehandlung in dem thermophilen Bereich, der Biogas mit 85% Methangehalt mit einer Rate von 0,47 bis 0,5 m³ Biogas/kg abgebauter organischer Masse erzeugt, unterzogen wird, wobei die Erfordernisse an thermischer und elektrischer Energie des Verfahrens abgedeckt werden, und das abgegebene Abfallwasser aerobisch bis zu einem Reinigungsgrad von BOD 100 behandelt wird.

2. Verfahren nach Anspruch 1, dadurch gekennzeichnet, daß die gereinigte Baumwolle eine Wasserabsorptionsfähigkeit von 10 bis 20 g Wasser/g Baumwolle besitzt.

3. Verfahren nach Anspruch 1 oder 2, dadurch gekennzeichnet, daß die gereinigte Baumwolle eine Rate der Wasserabsorption von 0,5 -1,5 g Wasser/g Baumwolle/Minute hat.

4. Verfahren nach einem der Ansprüche 1 bis 3, dadurch gekennzeichnet, daß die Behandlungslösung unter Ersatz von 20-40% hiervon durch frische Behandlungslösung recycelt wird, und die Wasserströmung eine Gleichgewichtsverunreinigungsbeladung von 20.000-40.000 BOD und von 50.000-100.000 COD in Abhängigkeit von den Behandlungsbedingungen erreicht.

5. Verfahren nach einem der Ansprüche 1 bis 4, dadurch gekennzeichnet, daß die gereinigte Baumwolle einen hohen Weißgrad von 85-90 Grad Lovibond hat.

6. Verfahren nach einem der Ansprüche 1 bis 5, dadurch gekennzeichnet, daß die gereinigte, nachmercerisierte und gebleichte Baumwolle getrocknet wird und zu Hochqualitätsgarnen für das Verweben und Färben gesponnen wird.

## Revendications

1. Procédé de traitement de coton, dans lequel on soumet du coton à un procédé de purification dans de l'eau, pour le rendre hydrophile, caractérisé en ce que le coton, placé dans un filet en fibres de polypropylène ou autres fibres appropriées, est mis en suspension, en une proportion de 1/15 à 1/20 du poids de coton au poids de solution, dans une solution aqueuse qui contient de l'hydroxyde de calcium, en une proportion de 2 à 4 % du poids d'oxyde de calcium au poids de coton, ainsi qu'un détergent non-ionique jouant le rôle d'agent mouillant, en une quantité de 0,4 à 4 g par litre d'eau, puis chauffé à une température de 60 à 150 °C et de préférence de 60 à 80 °C, le coton est maintenu dans ce filet pendant tout le procédé, qui comporte des opérations d'essorage à la presse et de lavage ainsi que deux étapes de blanchiment pour décoloration, l'eau résiduaire, contenant une charge polluante sélectionnée en équilibre, est soumise à un traitement anaérobie de digestion dans le domaine pour thermophiles qui fournit du biogaz contenant 85 % de méthane, à raison de 0,45 à 0,5 m³ de biogaz par kg de matière organique dégradée, ce qui couvre les besoins du procédé en énergie thermique et électrique, et l'effluent d'eau usée subit un traitement aérobie jusqu'à ce qu'il soit purifié à un degré tel que sa DBO vaut 100.

2. Procédé conforme à la revendication 1, caractérisé en ce que le coton purifié peut absorber de l'eau à raison de 10 à 20 g d'eau par g de coton.

3. Procédé conforme à la revendication 1 ou 2, caractérisé en ce que le coton peut absorber de l'eau à la vitesse de 0,5 à 1,5 g d'eau par g de coton et par minute.

4. Procédé conforme à l'une des revendications 1 à 3, caractérisé en ce qu'on recycle la solution de traitement en en remplaçant de 20 à 40 % par de la solution de traitement neuve et en ce que le courant d'eau prend une charge polluante qui, à l'équilibre, correspond à une DBO de 20 000 à 40 000 et à une DCO de 50 000 à 100 000, en fonction des conditions du traitement.

5. Procédé conforme à l'une des revendications 1 à 4, caractérisé en ce que le coton purifié présente un haut degré de blancheur, de 85 à 90 degrés Lovibond.

6. Procédé conforme à l'une des revendications 1 à 5, caractérisé en ce que le coton purifié, post-mercerisé et blanchi, est séché et filé en fils de haute qualité, pour tissage et teinture.
